# EUROPEAN PATENT SPECIFICATION

(11) **EP 3 205 413 B1**
(45) Date of publication and mention of the grant of the patent: **20.03.2019**
(21) Application number: 17155849.7
(22) Date of filing: 13.02.2017
(51) Int. Cl.: B09B 3/00, A62D 101/41

(54) **METHOD FOR REMOVAL OF HARMFUL FIBER CONTAINING MATERIALS**
VERFAHREN ZUM ENTFERNEN VON MATERIALIEN MIT SCHÄDLICHEN FASERN
PROCÉDÉ D'ÉLIMINATION DE MATIÈRES CONTENANT DES FIBRES NOCIVES

(30) Priority: 15.02.2016 NL 2016262
(43) Date of publication of application: 16.08.2017
(73) Proprietor: Foamshield License B.V., 3466 LB Waarder (NL)
(72) Inventor: DE HAAN, Foppe, 3466 LB Waarder (NL)
(74) Representative: van Dam, Vincent

(56) References cited:
- EP-A1- 0 946 448
- Foamshield: "Removal of Friable Ceiling with FoamShield", , 10 July 2013 (2013-07-10), page 7 pp., XP054976578, Retrieved from the Internet: URL:https://www.youtube.com/watch?v=o3kX4F IFUjw [retrieved on 2016-06-08]
- Anonymous: "Products & Equipment < FoamShield", , 11 August 2015 (2015-08-11), XP055277630, Retrieved from the Internet: URL:https://web.archive.org/web/2015081115 4119/http://foamshield.com/products-and-eq uipment/ [retrieved on 2016-06-03]
- Anonymous: "FoamShield", , 12 January 2016 (2016-01-12), XP055277634, Retrieved from the Internet: URL:https://web.archive.org/web/2016011211 2350/http://foamshield.com/ [retrieved on 2016-06-03]

## Description

### BACKGROUND

The invention relates to a method for removal of harmful fiber containing materials from a building structure.

Many buildings contain building parts with harmful fibers or other harmful fiber containing materials, such as asbestos containing materials. Upon disturbance of said building parts, these fibers may become airborne, which forms a health risk. For instance asbestos is known to cause serious lung diseases such as mesothelioma. Removal of such material from buildings therefore also involves serious risks.

Therefore there is an ongoing need for improved methods for safe removal of harmful fiber containing materials, such as asbestos containing materials from buildings.

Various methods for removing these materials exist such as the application of low air pressure in the area from which the materials are removed, or integral containment thereof. In one technique materials are pretreated with foam to encapsulate the materials to be removed and to reduce the amount of fibers that become airborne upon disturbance and/or removal of said materials. The inventors have observed that despite this foam treatment still a significant amount of fibers become airborne during the treatment. The present invention aims to improve the safety of removing harmful fiber containing materials, such as asbestos.
In the movie "Foamshield: "Removal of Friable Ceiling with Foamshield" of 10 July 2013 the removal of friable asbestos contaminated material prior to the commencement of demolition is shown, by implementing a containment system, wherein the exposure to asbestos fibres is eliminated as the fibres become encapsulated in foam, thereby preventing respirable asbestos fibre release into the air and protecting workers from exposure.

### SUMMARY OF THE INVENTION

The invention therefore relates to a method for removal of a harmful fiber containing material from a building structure according to claim 1.

The inventors have surprisingly found that the safety of removal of harmful fiber containing materials from a building structure can be significantly improved when said harmful fiber containing materials are treated with an aerosol obtained from an amphipathic solution, followed by a treatment with a foam obtained from an amphipathic solution. The inventors have observed that this pre-treatment with an aerosol leads to considerable less airborne fibers during the removal process. This way removal of harmful fiber containing materials becomes safer.

### BRIEF DESCRIPTION OF THE DRAWINGS

The invention will be elucidated on the basis of an exemplary embodiment shown in the attached drawings, in which:
Figure 1A shows a room comprising asbestos containing plates during a step of releasing an aerosol according to the invention;
Figure 1B shows a cross section of one of the asbestos containing plates during release of the aerosol as shown in figure 1A;
Figure 2A shows the room as shown in figure 1A during a step of foaming of the asbestos containing plates according to the invention; and
Figure 2B shows the cross section of the asbestos containing plate of figure 1A after the foaming as shown in figure 2A.

### DETAILED DESCRIPTION OF THE INVENTION

In the method of the invention harmful fiber containing materials are removed from a building structure, such as a house, office or hospital.

The harmful fiber containing materials can be any material present in a building. Said materials can be any structure and can suitably be in the form of building parts of said building. The building parts can be any building parts of a building such as parts of a floor, wall or ceiling, such as a plate with a cement layer in which the silicate ceramic fibers are enclosed.

The harmful fibers may be silicate ceramic fibers. These silicate ceramic fibers may be glasswool fibers or rockwool fibers or other man-made fibers or asbestos fibers such as chrysotile or white asbestos, amosite or brown asbestos, crocidolite or blue asbestos, tremolite or gray asbestos, anthophyllite or yellow asbestos, and actinolite or green asbestos.

In the method of the invention harmful fiber containing materials are pretreated with an aerosol. This pretreatment comprises a step of releasing an aerosol inside the building structure, which aerosol spreads out towards the harmful fiber containing material to be removed and partly penetrates it.

In the method of the invention the pretreatment step is followed by a step of blowing and applying a foam against the harmful fiber containing material to be removed, which foam at least partly penetrates it.

Subsequently, removal of the harmful fiber containing material may take place mechanically or by hand.

In the context of the invention the aerosol can be defined as a colloid of fine solid particles or liquid droplets in air, i.e. a mist of liquid particles. In the context of the invention the foam can be defined as a mass of small bubbles that are formed in or on a liquid, in other words a thick liquid made of many small bubbles.

The aerosol and the foam are both formed from a water based amphipathic solution, such as a soap. The aerosol may be formed from a different water based amphipathic solution than the foam, but for reasons of efficiency it is preferred that the aerosol and foam are formed from the same amphipathic concentrate.

The aerosol and foam may be obtained by diluting a concentrated liquid amphipathic solution with water. The aerosol in general contains a higher ratio of water to solutes compared to the foam. In other words, the functional ingredients, i.e. the amphipathic solutes such as detergent compounds, in the foam are more concentrated than in the aerosol. In a suitable embodiment in which the foam and aerosol are prepared from the same amphipathic concentrate, the concentration of solutes in the foam may be about twice as high as the concentration of solutes in the aerosol.

Amphipathic solutions for making the foam and/or aerosol are commercially available such as the Foamshield™ product of Foamshield Europe BV, the Netherlands. Alternatively, amphipathic concentrates can be prepared by a skilled person using procedures that are known in the art.

The amphipathic solution used for preparing the aerosol and foam comprises a sulfonic acid derivative. The sulfonic acid derivative preferably is a C₁₄-₁₆-alkanehydroxysulfonic acid, and/or a C₁₄-₁₆-alkenesulfonic acid. The liquid amphipathic solution may additionally comprise 2-butoxylethanol and/or 2-propylheptanolethoxylate.

In a preferred embodiment the liquid amphipathic solution for forming the aerosol and/or foam is obtained by mixing a sodium salt of a C₁₄-₁₆-alkanehydroxysulfonic acid, and/or a C₁₄-₁₆-alkenesulfonic acid, 2-butoxyethanol and 2-propylheptanolethoxylatein a ratio of 1-4 weight parts sodium salt of a C₁₄-₁₆-alkanehydroxysulfonic acid, and/or a C₁₄-₁₆-alkenesulfonic acid, <1 weight parts of 2-butoxyethanol and <1 weight parts of 2-propylheptanolethoxylate. The foam and aerosol may originate from a liquid amphipathic solution comprising water with 2,5-10 weight % of sodium salt of a sulfonic acid dissolved therein. In particular, the sulfonic acid is C₁₄-₁₆-alkanehydroxysulfonic acid, and/or C₁₄-₁₆-alkenesulfonic acid. The liquid amphipathic solution preferably additionally comprises less than 2,5 weight% 2-butoxylethanol. The liquid amphipathic solution preferably additionally comprises less than 2,5 weight % 2-propylheptanolethoxylate.

In the step of pretreatment with aerosol the harmful fiber containing materials are pretreated before the application of the foam. For this purpose an aerosol may be released inside a room in which the harmful fiber containing material to be removed is positioned by means of an aerosol generator. The aerosol can then fill the entire room for a prescribed amount of time whereby it is evenly absorbed by the harmful fiber containing materials. The liquid amphipathic solution may be contained in an aerosol generator which works stand-alone so that the aerosol can be released inside the room without the need for the human presence. Alternatively the solution can be applied using a handpump or any other aerosol generating means.

In the next step of treatment with foam the covering foam is normally manually applied by a person wearing protective clothing and a respirator. The room in which the harmful fiber containing material to be removed is positioned may be fully contained or kept under low air pressure by means of air extractors with filters for the fibers.

The exact amount of time required for treatment with aerosol or foam in order to reach at least partial penetration of the material may depend on the absorptive properties of the material to be removed or the amphipathic solutes in the aerosol and can be easily determined by the skilled person.

The invention will now be further elucidated on the basis of an exemplary embodiment shown in the attached drawings.

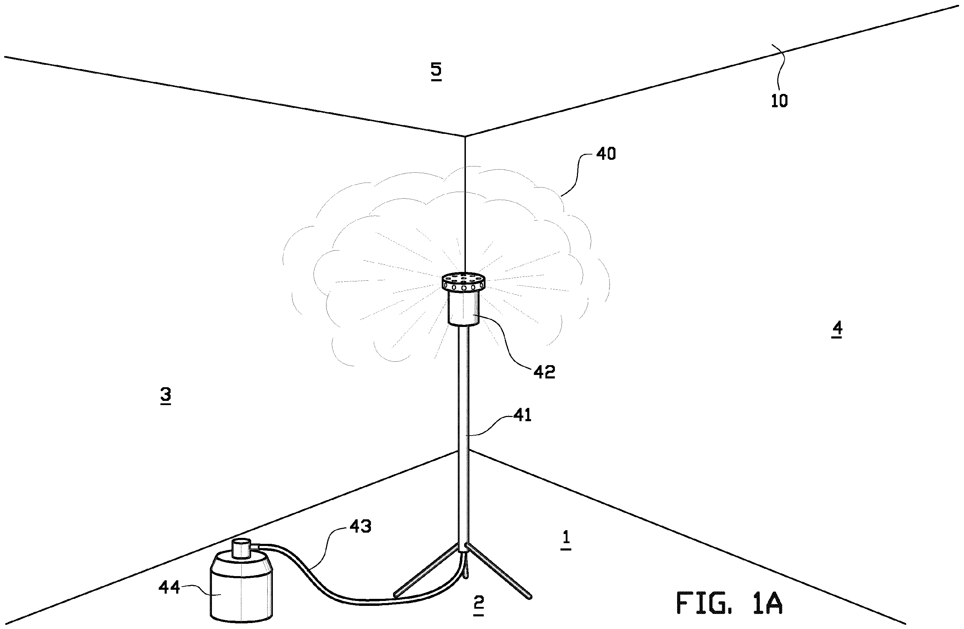

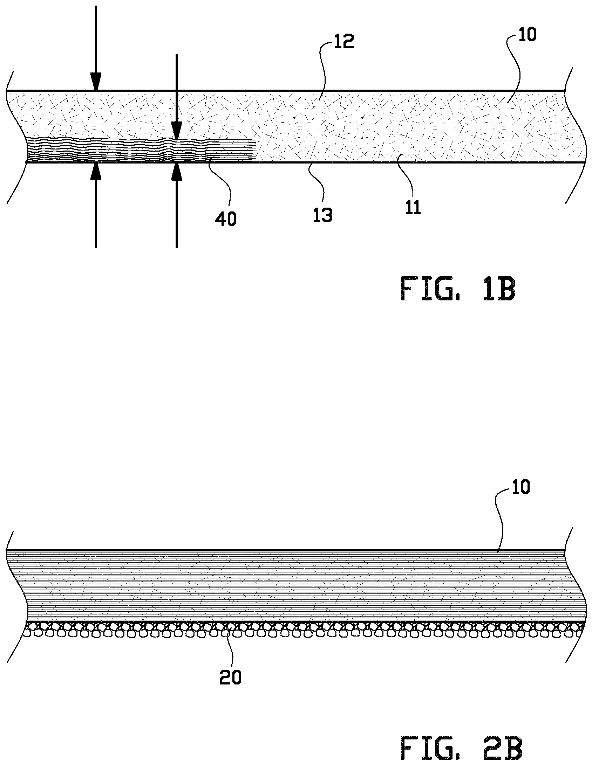

Figure 1A shows a room 1 of a building, such as a house, office or hospital, that is bounded by a floor 2, two sidewalls 3, 4 and a ceiling 5. In this example the ceiling 5 comprises suspended plates 10 of which the cross section is shown in figures 1B and 2B.

As shown in figures 1B and 2B the plates 10 contain harmful fibers 12 that are bounded by a suitable adhesive or binding substance such as cement 11 that give the plates 10 sufficient stiffness to be suspended along their circumferential edges or by means of some local spot mountings.

The harmful fibers 12 of the plates are in this example asbestos fibers such as amosite or brown asbestos. As best shown in figure 1B, the majority of the harmful fibers 12 are fully embedded in the cement 11. Some of these fibers 13 are located at the surface and are only partly embedded in the cement 11. When the plates 10 are disturbed, for example when it is mechanically removed from the ceiling 5, the fibers 12 that are fully embedded remain enclosed inside the cement 10 while the partly embedded fibers 13 may be released from the cement 10 and become airborne. Alternatively, the plates 10 comprise a layer of glasswool or rockwool of which the silicate ceramic fibers may become airborne by disturbance of the plates.

These particular fibers 12 form a health risk whereby exposure should be prevented. Removal of the plates 10 that contain these particular fibers 12 is performed under restricted safety conditions to prevent or control the release thereof during the disturbance of the plates 10. In many countries national regulations apply wherein different safety classes are distinguished that indicate the density of the remaining particles after removal of the plates 10.

In practice the plates 10 of multiple rooms 1 are removed together within one decontamination project.

It is envisaged to remove the plates 10 together with as much fibers 12 as possible. In accordance with the method of the invention, the plates 10 are first pretreated with an aerosol. This is shown in figure 1A. At the pretreatment an aerosol 40 is released inside the room 1 by means of an aerosol generator 41. The aerosol generator 41 comprises an aerosol nozzle 42 that is connected to a liquid supply 44 by means of a hose 43. The aerosol 40 comprises airborne liquid particles of the same liquid amphipathic solution as is used to generate the foam 20 that will be applied thereafter but with a lower concentration in water. The aerosol 40 is obtained by adding water to the mixture that will also be used for the foam 20. The aerosol 40 fills the entire room 1 for a prescribed amount of time whereby it is evenly absorbed by the plates 10. The diluted liquid amphipathic solution is contained in the aerosol generator 41 which works stand-alone whereby the aerosol 40 is released inside the room 1 without the need for the human presence.

Figure 1B shows one of the plates 10 after the pretreatment with the aerosol 40. The aerosol 40 has been absorbed as from the surface of the plate 10 that faces the room 1. The penetration depth is only a portion of the thickness of the plate 10. Thereby in particular the fibers 13 that are located at the surface and are only partly embedded in the cement 11 are encapsulated by the amphipathic solution. This prevents the release thereof during the following step of the application of the foam 20. These fibers 13 would otherwise be released, for example by the strong air jet 35 from the foaming lance 31 or by the disturbance caused by the person 30 while preparing the removal of the plates 10. As by the pretreatment with the aerosol 40 the release of the fibers 13 is prevented, it is prevented that these fibers would flutter down onto the floor 2.

After the pretreatment step the covering foam 20 is applied to the plates 10. The foaming process is schematically shown in figure 1B and a cross section of one of the plates after the foaming is shown in figure 2B. The foam 20 is applied prior to the removal the plates 10 to further immobilize the fibers 12 in addition to the cement 11.

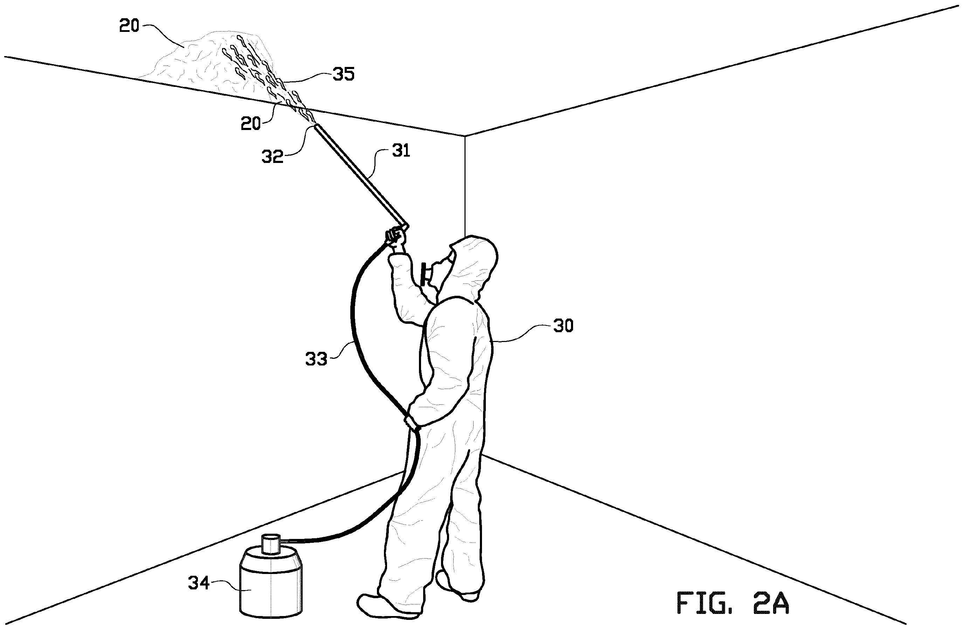

As shown in figure 2A, the covering foam 20 is manually applied by a person wearing protective clothing and a respirator. The room 1 may be fully contained or kept under low air pressure by means of air extractors with filters for the fibers 12. The covering foam 20 is applied by means of a foaming lance 31 with a foam nozzle 32 that is connected to a foam generator 34 via a hose 33. The liquid amphipathic solution is contained in the foam generator 34. The foam generator generates a strong air jet 35 comprising the foam 20.

The result of the application of the foam 20 is shown in figure 2B. The majority of the foam 20 has fully penetrated the plate 10, in this example the cement 11 of the plate 10, while encapsulating and fixating the fibers 12. The plates 10 are then ready to be removed mechanically while fractures are prevented as much as possible. At a fracture the penetrated foam 20 prevents the exposed fibers 12 to become airborne.

### Example

To test whether the pretreating harmful fiber containing materials with an aerosol before applying a foam results in less airborne fibers during the removal process of harmful fiber containing materials a test was performed in two separate rooms each comprising a plate of 40 x 60 cm with a thickness of 2 cm in the ceiling comprising a board of non-bound asbestos. The asbestos contained 30-60% amosite. In the first room only a foam was applied to the plate. In the second room the pretreatment with the aerosol was performed prior to applying the foam to the plate.

The foam was obtained by diluting a detergent concentrate comprising water with 2,5-10 weight % of sodium salts of C₁₄-₁₆-alkanehydroxysulfonic acid and C₁₄-₁₆-alkenesulfonic acid, less than 2,5 weight% 2-butoxylethanol and less than 2,5 weight % 2-propylheptanolethoxylate. Such concentrate is commercially available under the name FoamShield™ from Foamshield Europe BV, the Netherlands. The concentrate was diluted with water to obtain an aerosol and a foam solution such that the concentration of solutes in the aerosol was 50% of the concentration of solutes in the foam.

The fiber concentration of the fibers in the first room and the second room after removal of the plate was determined according to ISO14966. The concentration of the fibers after removal of the plate from the first room was set to 100%. It appeared that after removal of the plate the concentration of fibers in the second room was only approximately 10 % of the fibers in the first room. The relative fiber reduction in the second room was 90%. The test was performed using non-bound asbestos. The relative fiber reduction is even better when bounded asbestos was used, such as in the plates with the cement as described above.

The above example shows that when said harmful fiber containing materials are treated with an aerosol obtained from an amphipathic solution, followed by a treatment with a foam obtained from an amphipathic solution considerable less airborne fibers are formed compared to a foam treatment application alone. The examples show that this way the safety of removal of harmful fiber containing materials from a building structure can be significantly improved.

## Claims

1. Method for removal of a harmful fiber containing material from a building structure, wherein the method comprises a step of releasing an aerosol (40) inside the building structure, which aerosol spreads out towards the harmful fiber containing material to be removed and partly penetrates it, followed by a step of blowing and applying a foam (20) against the harmful fiber containing material to be removed, which foam at least partly penetrates it, followed by removal of said harmful fiber containing material, wherein the aerosol (40) and the foam are both formed from a water based amphipathic solution, wherein the amphipathic solution comprises a sulfonic acid derivative.

2. Method according to claim 1, wherein the sulfonic acid derivative is a C₁₄-₁₆-alkanehydroxysulfonic acid, and/or a C₁₄-₁₆-alkenesulfonic acid.

3. Method according to claim 1 or 2, wherein the amphipathic solution additionally comprises 2-butoxylethanol and/or 2-propylheptanolethoxylate.

4. Method according to claim 3, wherein the amphipathic solution for forming the foam is obtained by admixing a sodium salt of a C₁₄-₁₆-alkanehydroxysulfonic acid, and/or a C₁₄-₁₆-alkenesulfonic acid, 2-butoxyethanol and 2-propylheptanolethoxylatein a ratio of 1-4 weight parts sodium salt of a C₁₄-₁₆-alkanehydroxysulfonic acid, and/or a C₁₄-₁₆-alkenesulfonic acid, <1 weight parts of 2-butoxyethanol and <1 weight parts of 2-propylheptanolethoxylate.

5. Method according to any one of the preceding claims, wherein the harmful fiber containing materials are building parts which comprise a plate (10) with a cement layer (11) in which the harmful fibers (13) are enclosed.

6. Method according to any one of the preceding claims, wherein the harmful fibers (13) are silicate ceramic fibers.

7. Method according to claim 6, wherein the silicate ceramic fibers are asbestos fibers, such as chrysotile or white asbestos, amosite or brown asbestos, crocidolite or blue asbestos, tremolite or gray asbestos, anthophyllite or yellow asbestos, and actinolite or green asbestos.

8. Method according to any one of the claims 1-6, wherein the silicate ceramic fibers are glasswool fibers or rockwool fibers or other man-made mineral fibers.

## Patentansprüche

1. Ein Verfahren zur Entfernung eines schädliche Fasern enthaltenen Materials aus einem Baukörper, wobei das Verfahren einen Schritt des Freisetzen eines Aerosols (40) innerhalb des Baukörpers umfasst, wobei sich das Aerosol in Richtung des zu entfernenden, schädliche Fasern enthaltenen Materials ausbreitet und teilweise in dieses eindringt, gefolgt von einem Schritt des Blasens und Aufbringen eines Schaums (20) gegen bzw. auf das zu entfernende, schädliche Fasern enthaltene Material, wobei der Schaum zumindest teilweise in dieses eindringt, gefolgt von der Entfernung des schädliche Fasern enthaltenen Materials, wobei das Aerosol (40) und der Schaum (20) beide aus einer wasserbasierten amphipathischen Lösung gebildet sind, wobei die amphipathische Lösung ein Sulfonsäurederivat umfasst.

2. Das Verfahren gemäß Anspruch 1, wobei das Sulfonsäurederivat eine C₁₄-₁₆-Alkanhydroxysulfonsäure und/oder eine C₁₄-₁₆-Alkensulfonsäure ist.

3. Das Verfahren gemäß Anspruch 1 oder 2, wobei die amphipathische Lösung zusätzlich 2-Butoxyethanol und/oder 2-Propylheptanolethoxylat umfasst.

4. Das Verfahren gemäß Anspruch 3, wobei die amphipathische Lösung zur Bildung des Schaums durch Vermischen eines Natriumsalzes von einer C₁₄-₁₆-Alkanhydroxysulfonsäure und/oder einer C₁₄-₁₆-Alkensulfonsäure, 2-Butoxyethanol und 2-Propylheptanolethoxylat in einem Verhältnis von 1-4 Gewichtsteilen Natriumsalz von einer C₁₄-₁₆-Alkanhydroxysulfonsäure und/oder einer C₁₄-₁₆-Alkensulfonsäure, <1 Gewichtsanteil an 2-Butoxyethanol und <1 Gewichtsanteil an 2-Propylheptanolethoxylat erhalten wird.

5. Das Verfahren gemäß einem der vorhergehenden Ansprüche, wobei die schädlichen Fasern enthaltenen Materialien Baukörper sind, welche eine Platte (10) mit einer Zementschicht (11), in welcher die schädlichen Fasern (13) eingeschlossen sind, umfassen.

6. Das Verfahren gemäß einem der vorhergehenden Ansprüche, wobei die schädlichen Fasern (13) silikatkeramische Fasern sind.

7. Das Verfahren gemäß Anspruch 6, wobei die silikatkeramischen Fasern Asbestfasern sind, wie z. B. Chrysotil oder weißer Asbest, Amosit oder brauner Asbest, Krokydolith oder blauer Asbest, Tremolit oder grauer Asbest, Anthophyllit oder gelber Asbest und Aktinolith oder grüner Asbest.

8. Das Verfahren gemäß einem der Ansprüche 1 bis 6, wobei die silikatkeramischen Fasern Glaswollefasern oder Steinwollefasern oder andere synthetische Mineralfasern sind.

## Revendications

1. Procédé pour l'élimination d'une matière contenant des fibres nocives au niveau d'une structure de construction, dans lequel le procédé comprend une étape de libération d'un aérosol (40) à l'intérieur de la structure de construction, lequel aérosol se répand en direction de la matière contenant des fibres nocives à éliminer et la pénètre partiellement, cette étape étant suivie par une étape de soufflage et d'application d'une mousse (20) contre la matière contenant des fibres nocives à éliminer, laquelle mousse la pénètre au moins partiellement, cette étape étant suivie par l'élimination de ladite matière contenant des fibres nocives, dans lequel l'aérosol (40) et la mousse sont tous deux formés à partir d'une solution amphipathique à base d'eau, dans lequel la solution amphipathique comprend un dérivé d'acide sulfonique.

2. Procédé selon la revendication 1, dans lequel le dérivé d'acide sulfonique est un acide C₁₄-₁₆-alcanehydroxysulfonique et/ou un acide C₁₄-₁₆-alcènesulfonique.

3. Procédé selon la revendication 1 ou 2, dans lequel la solution amphipathique comprend de façon additionnelle du 2-butoxyéthanol et/ou du 2-propylheptanoléthoxylate.

4. Procédé selon la revendication 3, dans lequel la solution amphipathique pour former la mousse est obtenue en mélangeant un sel de sodium d'un acide C₁₄-₁₆-alcanehydroxysulfonique et/ou d'un acide C₁₄-₁₆-alcènesulfonique, du 2-butoxyéthanol et du 2-propylheptanoléthoxylate selon un rapport de 1 à 4 partie (s) en poids de sel de sodium d'un acide C₁₄-₁₆-alcanehydroxysulfonique et/ou d'un acide C₁₄-₁₆-alcènesulfonique, moins de 1 partie en poids de 2-butoxyéthanol et moins de 1 partie en poids de 2-propylheptanoléthoxylate.

5. Procédé selon l'une quelconque des revendications qui précèdent, dans lequel les matières contenant des fibres nocives sont des parties de construction qui comprennent une plaque (10) avec une couche de ciment (11) dans laquelle les fibres nocives (13) sont renfermées.

6. Procédé selon l'une quelconque des revendications qui précèdent, dans lequel les fibres nocives (13) sont des fibres de céramique de silicate.

7. Procédé selon la revendication 6, dans lequel les fibres de céramique de silicate sont des fibres d'amiante, telles que des fibres d'amiante chrysotile ou blanche, d'amiante amosite ou brune, d'amiante crocidolite ou bleue, d'amiante trémolite ou grise, d'amiante anthophyllite ou jaune ou d'amiante actinolite ou verte.

8. Procédé selon l'une quelconque des revendications 1 à 6, dans lequel les fibres de céramique de silicate sont des fibres de laine de verre ou des fibres de laine de roche ou d'autres fibres minérales fabriquées par l'homme.
